# EUROPÄISCHE PATENTSCHRIFT

(11) **EP 3 908 555 B1**
(45) Veröffentlichungstag und Bekanntmachung des Hinweises auf die Patenterteilung: **27.11.2024**
(21) Anmeldenummer: 20702739.2
(22) Anmeldetag: 03.01.2020
(51) Int. Cl.: C02F 3/20, C02F 3/00, C02F 1/00, C02F 3/12, C02F 1/68, B01D 21/24

(54) **ABWASSERBEHANDLUNGSANLAGE**
WASTEWATER TREATMENT PLANT
STATION DE TRAITEMENT D'EAUX USÉES

(30) Priorität: 10.01.2019 DE 102019100455
(43) Veröffentlichungstag der Anmeldung: 17.11.2021
(73) Patentinhaber: Id.I UG, 52074 Aachen (DE)
(72) Erfinder: LANCÉ, Elmar, 52074 Aachen (DE)
(74) Vertreter: Kohlmann, Kai
(86) Internationale Anmeldenummer: PCT/EP2020/050104
(87) Internationale Veröffentlichungsnummer: WO 2020/144121

(56) Entgegenhaltungen:
- EP-A2- 1 192 978
- DE-B- 1 266 242
- DE-U1- 20 001 523
- US-A- 5 352 356
- US-A1- 2006 151 367
- @BULLET: "Water Management Solutions Aeration & Mixing Biological Processes Membranes Filtration Controls & Monitoring Systems Aftermarket Products and Services", 31 December 2013 (2013-12-31), pages 2508, XP055738059, Retrieved from the Internet <URL:https://www.aqua-aerobic.com/downloads/AquaSBRbrochure9-2013_web.pdf> [retrieved on 20201008]

## Beschreibung

Die Erfindung betrifft eine sequentiell arbeitende Abwasserbehandlungsanlage zur biologischen Reinigung von Abwasser umfassend einen Reaktorbehälter zur Aufnahme von Abwasser mit einem Einlass für das unbehandelte Abwasser und einem Auslass für das behandelte Abwasser sowie einer Belüftungsvorrichtung zum Lufteintrag in das Abwasser, die am Grund des Reaktorbehälters angeordnet ist.

Die Abwasserbehandlungsanlage umfasst außerdem eine beweglich in dem Reaktorbehälter angeordnete Ablaufvorrichtung mit einem Ablaufeinlass für das behandelte Abwasser, eine fluidleitende Verbindung zwischen dem Ablaufeinlass der Ablaufvorrichtung und dem Auslass und eine be- und entlüftbare Hebevorrichtung für die Ablaufvorrichtung, die durch Belüften den Ablaufeinlass der Ablaufvorrichtung vollständig aus dem Abwasser heraushebt und durch Entlüften den Ablaufeinlass der Ablaufvorrichtung in das Abwasser (3) eintaucht.

Sequentiell arbeitende Abwasserbehandlungsanlagen, auch als SBR-Anlagen (SBR - Sequencing-Batch-Reactor) bezeichnet, arbeiten im Belebtschlammverfahren im Aufstaubetrieb. In den Reaktorbehälter wird mit der Belüftungsvorrichtung Luft feinblasig eingetragen. Mit der Belüftung wird die Sauerstoffversorgung der Bakterien für die biologische Reinigung sichergestellt.

In SBR-Anlagen werden zumindest die biologische Reinigung und die Nachklärung sequentiell in dem Reaktorbehälter durchgeführt. Die Vorklärung erfolgt üblicherweise in einer separaten Vorklärkammer. Darüber hinaus sind sogenannte Einbehälteranlagen bekannt geworden, in der alle Abwasserbehandlungsschritte in einem oder mehreren Reaktorbehältern, jedoch ohne Vorklär- und Nachklärkammer stattfinden.

Die Abwasserbehandlung nach dem Belebtschlammverfahren im Aufstaubetrieb in SBR-Anlagen unterteilt sich in folgende Phasen, die zusammen einen Zyklus bilden:
1. Füllphase
   Das zu behandelnde Abwasser gelangt entweder in die Vorklärkammer, in der feste Bestandteile zurückgehalten werden, oder wird diskontinuierlich unmittelbar in den oder die Reaktorbehälter der Einbehälteranlage geleitet.
2. Reaktionsphase
   In dem Reaktorbehälter findet die biologische Reinigung des Abwassers statt. Mit der Belüftungsvorrichtung wird Luft in den Reaktorbehälter eingetragen. Der sogenannte Belebtschlamm mit Mikroorganismen entsteht und das Abwasser wird durch den Lufteintrag umgewälzt und biologisch gereinigt.
3. Absetzphase
   In einer anschließenden Phase ohne Lufteintrag, der Absetzphase, sinkt der Belebtschlamm zum Boden des Reaktorbehälters ab. Dadurch bildet sich im oberen Teil des Reaktorbehälters eine Klarwasserzone.
**4. Dekantierphase**
   Das behandelte Abwasser aus der Klarwasserzone wird mit einem Klarwasserabzug abgezogen und in einen Vorfluter oder eine Versickerungsanlage eingeleitet.

Aus der DE 10 2014 103 652 ist eine Einbehälteranlage zur Abwasserbehandlung nach dem Belebtschlammverfahren im Aufstaubetrieb mit aerober Schlammstabilisierung bekannt. Die Einbehälteranlage arbeitet mit einem Zyklus je Tag. Der Zulauf von Abwasser in der Füllphase erfolgt über ein verlängertes Tauchrohr zur Zulaufberuhigung. Der Lufteintrag in der Reaktionsphase erfolgt mit mehreren sternförmig angeordneten Rohrmembranbelüftern. Für den Klarwasserabzug in der Dekantierphase kommt eine Tauchmotorpumpe zum Einsatz, die in einem Unterdruck-Behälter angeordnet ist.

Eine weitere Einbehälteranlage zur Abwasserbehandlung nach dem Belebtschlammverfahren im Aufstaubetrieb mit aerober Schlammstabilisierung von KLARO ist aus Kleinkläranlagen heute, Bernd Goldberg, 3., vollständig überarbeitete und erweiterte Auflage 2018, Beuth Verlag GmbH, Seiten 365 - 367 bekannt. Die Einbehälteranlage hat eine Tauchwand für die Befestigung einer Mammutpumpe für den Klarwasserabzug. Für den Lufteintrag in das Abwasser sind am Grund des Reaktorbehälters zwei Membranbelüfter angeordnet. Die Einbehälteranlage arbeitet mit 2 bis 5 Zyklen pro Tag. Die Mammutpumpe, auch als Druckluftheber bezeichnet, oder nach ihrem Erfinder Carl Immanuel Löscher auch Löscherpumpe genannt, ist ein senkrecht in das Abwasser eintauchendes Rohr, in das unterhalb des Abwasserspiegels Luft mittels eines Verdichters eingepresst wird. Druckluftheber dienen bevorzugt zur Hebung feststoffbeladener Flüssigkeiten. Mittels einer Ventilsteuerung mit drei Ventilen wird die Luft aus dem Verdichter wahlweise den beiden Membranbelüftern, dem Druckluftheber oder einer Schlammrückführung zugeführt. Die Ventile werden mittels einer elektronischen Steuerung angesteuert. Die Ventile und deren Steuerung sind technisch aufwändig, erfordern einen erhöhten Installationsaufwand und sind zudem störanfällig. Bei den Drucklufthebern besteht zudem die Gefahr der Verstopfung.

Aus der DE 10 2009 042 292 B3 ist eine Vorrichtung zum Abzug von Klarwasser aus einem Klärbecken einer SBR-Einbecken-Kläranlage bekannt, welche einen Einlaufkasten, bestehend aus einer zentralen Tauchwand sowie zwei seitlich davon angeordneten Schwimmkörpern, ein schwenkbares Ablaufrohr für das Klarwasser und einen Abflussstutzen, der mit dem Ablaufrohr in Verbindung steht, aufweist. Die Schwimmkörper sind gegenüber der Tauchwand höhenverstellbar. An der Tauchwandunterseite ist über eine mit den Schwimmkörpern verbundene bewegliche Führungssäule eine Einlaufplatte mit dem Abflussstutzen angeordnet. In der Ruhestellung liegt die Einlaufplatte fest an der Tauchwandunterseite an. Beim Eintauchen des Einlaufkastens in das Klärwasser erfahren die beiden seitlichen Schwimmkörper einen Auftrieb und werden nach oben gedrückt. Gleichzeitig drückt das Gewicht der Tauchwand den Einlaufkasten nach unten in das Wasser. Durch den Auftrieb der beiden Schwimmkörper sowie das nach unten ziehende Gewicht wird die Einlaufplatte nach unten zum Beckenboden der SBR-Anlage gezogen und dadurch die Einlauföffnung freigegeben. Die Einlauföffnung befindet sich unterhalb der Wasseroberfläche, so dass keine Schwimmstoffe oder aufschwimmende Schwebstoffe in den Klarwasserabzug gelangen können.

Die EP 1 192 978 A2 offenbart einen SBR-Reaktor zum Abziehen von Klarwasser aus einem Reaktorbehälter umfassend eine Auftriebseinrichtung. Die Auftriebseinrichtung weist zwei über- und/oder nebeneinander angeordnete Hohlkörper auf, von denen ein erster Hohlkörper mit Gas und ein zweiter Hohlkörper wahlweise mit Gas oder Flüssigkeit befüllbar ist. Von den Hohlkörpern gehen Ablauf-Öffnungen aufweisende erste Rohrelemente aus, über die das Klarwasser abgezogen wird. Die Rohrelemente mit den Ablauf-Öffnungen sind über Kompensatoren und ein Ablaufrohr mit einem Auslass in der Beckenwand des SBR-Reaktors verbunden. Die unteren Hohlkörper werden wahlweise mit Flüssigkeit oder mit Gas gefüllt, um die Ablauf-Öffnungen abstandsmäßig auf das Flüssigkeitsniveau in dem SBR-Reaktor einzustellen. Dabei wird der Auftrieb derart eingestellt, dass sich eine Überstauhöhe für die Öffnungen von etwa 100 - 200 mm ergibt. Um zu vermeiden, dass in der Abzugsphase Schwimmschlamm oder sonstige auf der Flüssigkeitsoberfläche schwimmende Partikel abgezogen werden, ist vorgesehen, dass in den Rohrelementen mit den Ablauf-Öffnungen bei zu geringem Abstand zu der Flüssigkeitsoberfläche Flüssigkeit in den Rohelementen angestaut wird, um die Ablauf-Öffnungen gegen ein Zuströmen von abzuziehender Flüssigkeit zu verschließen. Das Verschließen der Ablauf-Öffnungen durch Rückstau erfolgt mittels eines am Auslass des Reaktors angeordneten Absperrelementes, welches das Ablaufrohr erst dann freigibt, wenn die Rohrelemente mit ihren Öffnungen den erforderlichen Abstand zu der Flüssigkeitsoberfläche aufweisen.

Die US 5,352,356 A offenbart eine Dekantiervorrichtung zum periodischen Abziehen von Klarwasser aus einem Reaktorbehälter mit einem Verteiler, an dem mehrere Dekantierventile angeordnet sind. Die für einen Flüssigkeitsabzug vorgesehenen Dekantierventile sind über flexible Schläuche fluidleitend mit einem flexiblen Abwasserentladungsschlauch verbunden. Der flexible Wasserentladungsschlauch wird über die Oberkante des Reaktorbeckens geführt. Das Schlauchende ist mit einem bekannten Pumpen- oder Schwerkraftabzugssystem verbunden. Der Verteiler mit den Dekantierventilen ist über Ketten mit einer be- und entlüftbaren Blase verbunden und bleibt sowohl bei be- als auch entlüfteter Blase stets unter der Wasseroberfläche.

Die US 2006/151367 A1 offenbart eine schwimmende Dekantiervorrichtung, die den selektiven Abzug von Flüssigkeit aus SBR-Reaktoren erlaubt. Die Dekantiervorrichtung wird mittels Luft aktiviert. Die Dekantiervorrichtung weist ein Oberteil und ein Unterteil auf. Das Oberteil ist als ringförmiger Schwimmkörper ausgestaltet. Der untere Teil der Dekantiervorrichtung ist ein be- und entlüftbarer Auftriebskörper, der an dem Schwimmkörper mittels Führungen verschieblich gelagert ist. Der Auftriebskörper bildet eine zur Unterseite hin offene Auftriebskammer, die über eine Luftversorgungsleitung sowie eine Luftleitung zeitweilig mit Luft gefüllt wird. An der Oberseite des Auftriebskörpers befindet sich darüber hinaus eine Entladeöffnung zum Abzug der Flüssigkeit. Die Entladeöffnung ist mit einem Entladerohr verbunden, das einen Flansch aufweist, der über einen flexiblen Schlauch mit einem Auslass in der Beckenwand des Reaktors verbunden ist.

Bei belüfteter Auftriebskammer befindet sich die Entladeöffnung an der Oberseite des Auftriebskörpers oberhalb der Wasseroberfläche. Die Luft kann von Gebläsen bereitgestellt werden, die typischerweise für die Belüftung des SBR-Reaktors verwendet werden. Zu Beginn der Abzugsphase ist die Auftriebskammer entlüftet und der Wasserstand in der Auftriebskammer gegenüber dem Wasserstand vor Beginn der Abzugsphase erhöht. Infolgedessen sinkt sowohl der Schwimmer, als auch der Auftriebskörper ab und der Abzug von Flüssigkeit über die Entladeöffnung beginnt. Anschließend löst sich der Auftriebskörper von dem Schwimmkörper. Der Abzug der Flüssigkeit erfolgt nun über die vollständig unter der Wasseroberfläche befindliche Entladeöffnung.

Ausgehend von der US 2006/151367 A1 als nächstliegendem Stand der Technik liegt der Erfindung die Aufgabe zugrunde, eine im Belebtschlammverfahren im Aufstaubetrieb arbeitende Abwasserbehandlungsanlage (SBR-Anlage) der eingangs erwähnten Art zu schaffen, die nachdem das Abwasser in der Reaktionsphase ausreichend belüftet wurde, ein Eintauchen des Ablaufeinlasses in das Abwasser erst nach Ausbildung der Klarwasserzone mit einfachen Mitteln bewirkt .

Die Aufgabe wird durch einen Abwasserbehandlungsanlage mit den Merkmalen des Anspruchs 1 gelöst.

Der Auslass für das behandelte Abwasser ist unterhalb des Einlasses für das unbehandelte Abwasser in dem Reaktorbehälter angeordnet. Der Einlass befindet sich oberhalb des maximalen Abwasserstandes H_{W max} in dem Reaktorbehälter und der Auslass vorzugsweise unmittelbar oberhalb des minimalen Abwasserstandes H_{W min} in dem Reaktorbehälter. Ein- und Auslass weisen bei gegebener Form des Reaktorbehälters vorzugsweise einen maximal möglichen Abstand zueinander auf. Bei einem runden Behälterquerschnitt liegen sich Ein- und Auslass vorzugsweise diametral gegenüber.

Um den Ablauf des behandelten Abwassers trotz des unterhalb des Einlasses angeordneten Auslasses im Regelbetrieb der Anlage auf die Dekantierphase zu beschränken, ist eine beweglich in dem Reaktorbehälter angeordnete Ablaufvorrichtung mit einem Ablaufeinlass für das behandelte Abwasser und eine fluidleitende Verbindung zwischen dem Ablaufeinlass der Ablaufvorrichtung und dem Auslass sowie eine be- und entlüftbare Hebevorrichtung für die Ablaufvorrichtung vorgesehen, die durch Belüften den Ablaufeinlass der Ablaufvorrichtung vollständig aus dem Abwasser heraushebt und durch Entlüften den Ablaufeinlass der Ablaufvorrichtung in das Abwasser eintaucht. Die belüftete Hebevorrichtung verhindert während der Reaktions- und Absetzphase den Auslauf von Abwasser und aufgewirbeltem Belebtschlammflocken aus dem Reaktorbehälter.

Nachdem das Abwasser in der Reaktionsphase ausreichend belüftet wurde, folgt die Absetzphase ohne Belüftung und die Klarwasserzone bildet sich über den sich absetzenden Belebtschlammflocken aus. Für die Ausbildung der Klarwasserzone in der Absetzphase wird Zeit benötigt. Um nach dem Abschalten einer vorzugsweise gemeinsamen Druckluftversorgung, die zum zeitweiligen Belüften sowohl der Hebevorrichtung als auch der Belüftungsvorrichtung eingerichet ist, ein zeitverzögertes Entlüften der Hebevorrichtung und damit ein Eintauchen des Ablaufeinlasses in das Abwasser erst nach Ausbildung der Klarwasserzone zu bewirken, weist die Hebevorrichtung gemäß der Erfindung eine Drossel auf, die zum zeitverzögerten Entlüften der Hebevorrichtung nach Beendigung des Belüftens eingerichet ist. Die Drossel bewirkt, dass die Luft aus dem aufblasbaren Schwimmkörper bzw. dem Arbeitszylinder nur über einen längeren Zeitraum, der in etwa der Absetzphase zur Ausbildung der Klarwasserzone entspricht, vollständig entweichen kann. Die Drossel ist eine Abluftöffnung in dem Schwimmkörper, über die permanent ein Luftstrom aus dem Schwimmkörper entweicht, der stets geringer ist als der beim Belüften zugeführte Luftstrom. Über den Querschnitt der Abluftöffnung lässt sich die Durchflussmenge der Drossel bestimmen und damit die Zeitverzögerung der Entlüftung der Hebevorrichtung.

Durch Entlüften der Hebevorrichtung taucht die Ablaufvorrichtung aufgrund ihres Eigengewichts mit dem Ablaufeinlass in das Abwasser ein und das behandelte Abwasser aus der Klarwasserzone fließt im freien Gefälle durch den Auslass ab.

Die Hebevorrichtung umfasst einen aufblasbaren Schwimmkörper, der an der Ablaufvorrichtung befestigt ist. Abhängig von der Luftmenge in dem Schwimmkörper ändern sich die auf die Ablaufvorrichtung wirkende Auftriebskraft und damit deren Eintauchtiefe. Der aufblasbare Schwimmkörper besteht vorzugsweise aus einem flexiblen, gasdichten Material, beispielsweise einer Kunststofffolie, einem gummierten Gewebe oder synthetischen Gummi (z.B. Pu).

In einer Alternative, die nicht Teil der beanspruchten Erfindung ist, kann die Hebevorrichtung einen mittels Druckluft betriebenen Arbeitszylinder aufweisen. Der Arbeitszylinder kann beispielsweise über ein Gestänge die Ablaufvorrichtung derart bewegen, dass bei belüftetem Arbeitszylinder der Ablaufeinlass der Ablaufvorrichtung vollständig aus dem Abwasser herausgehoben ist und bei entlüftetem Arbeitszylinder der Ablaufeinlass in das Abwasser eintaucht.

Als fluidleitende Verbindung zwischen der beweglichen Ablaufvorrichtung und dem ortsfest in der Wand des Reaktorbehälters angeordnetem Auslass ist vorzugsweise ein flexibler Schlauch vorgesehen. Alternativ kann die fluidleitende Verbindung ein Rohrdrehgelenk und mindestens ein Rohr aufweisen. Das Rohrdrehgelenk erlaubt die Bewegung des an die bewegliche Ablaufvorrichtung angeschlossenen Rohres.

Bei noch ungenügender Ausbildung der Klarwasserzone kann eine Verlängerung der Absetzphase erforderlich sein. Um eine weitere Verzögerung der Entlüftung zu erreichen, kann eine Steuerung der Druckluftversorgung derart konfiguriert sein, dass während der Absetzphase zeitweilig Luft ausschließlich in die Hebevorrichtung einströmt, jedoch keine Luft aus der Belüftungsvorrichtung austritt, um die Ablaufvorrichtung nochmals etwas anzuheben. Die Steuerung begrenzt vorzugsweise den Druck der Luft beim Einblasen, so dass aufgrund des auf die Belüftungsvorrichtung wirkenden Gegendrucks keine Luft in das Abwasser eingetragen wird.

In einer Ausgestaltung der Erfindung weist die Steuerung für den zeitweiligen, insbesondere zyklischen Betrieb der Druckluftversorgung eine Messeinrichtung zur Erfassung des Füllstandes des Abwassers in dem Reaktorbehälter auf. Die Steuerung ist derart eingerichet, dass die Zufuhr von Druckluft vorzeitig abgebrochen wird, wenn der von der Messeinrichtung erfasste Füllstand des Abwassers einen vorgegebenen Grenzwert überschreitet. Die Zufuhr von Druckluft kann vorzeitig abgebrochen werden, indem die Druckluftversorgung abgeschaltet oder die Zuleitung für die Druckluft unterbunden wird. Eine mechanische Füllstandsmessung erfolgt beispielsweise mit einem Schwimmer auf dem Abwasserspiegel des Abwassers, der einen Schalter oder Wegaufnehmer bewegt. Alternativ wird die Höhe des Wasserstandes berührungslos erfasst, beispielsweise induktiv oder im Wege einer Druckdifferenzmessung.

Ein vorzeitiger Abbruch der Zufuhr von Druckluft kann dann erforderlich werden, wenn in der Reaktionsphase der Abwasserbehandlung ungeplant so viel unbehandeltes Abwasser zuläuft, dass ein Austritt von unbehandeltem Abwasser mit Belebtschlammflocken zu befürchten ist. Durch das Unterbrechen der Zufuhr von Druckluft sinken die Belebtschlammflocken zu Boden und es kann nur noch Abwasser aus der sich bildenden Klarwasserzone über die Ablaufvorrichtung oder den Notüberlauf die Anlage verlassen.

Besonders vorteilhaft ist es, wenn sich die Hebevorrichtung im Luftkreislauf der Belüftungsvorrichtung befindet, indem die Druckluftversorgung einen gemeinsamen Verdichter und ein Druckluftleitungssystem aufweist, welches die Druckseite des gemeinsamen Verdichters mit der Hebevorrichtung und der Belüftungsvorrichtung verbindet. Die Druckluftversorgung ist unter Berücksichtigung der Strömungswiderstände in dem Druckluftleitungssystem, der Hebevorrichtung und der Belüftungsvorrichtung und unter Berücksichtigung des auf die Hebevorrichtung und die Belüftungsvorrichtung wirkenden hydrostatischen Drucks derart ausgelegt, dass zunächst die Hebevorrichtung und anschließend die Belüftungsvorrichtung belüftet werden. Dies hat zur Folge, dass sich zunächst der Ablaufeinlass oberhalb der Wasseroberfläche befindet. Die weitere zugeführte Druckluft sucht sich sodann den Weg unter die Wasseroberfläche zum Grund des Behälters und tritt dort aus der Belüftungsvorrichtung aus, um den Belebtschlamm aufzuwirbeln und mit Sauerstoff zu versorgen.

Für erweiterte Anforderungen an die Reinigungsleistung kann es notwendig sein, Zuschlagsstoffe in das Abwasser der Anlage zuzugeben. In einer Ausgestaltung der Erfindung umfasst die Abwasserbehandlungsanlage deshalb eine Dosiervorrichtung für die Zugabe von Zuschlagstoffen in den Reaktorbehälter. Die Dosiervorrichtung ist insbesondere für das mengenproportionale Dosieren von Zuschlagstoffen, wie beispielsweise Fällmitteln zur Phosphorelimination und / oder von Chemikalien, wie beispielsweise Chlor zur Hygienisierung bzw. Entkeimung der Abwassers, eingerichtet.

Die Dosierung kann mittels einer mechanischen Auslaufvorrichtung erfolgen, welche mit einer Wippe verbunden ist. In diese Wippe läuft Abwasser. Durch das zunehmende Gewicht des Abwassers in der Wippe wird diese zum Auskippen des Abwassers veranlasst. Mit der Bewegung der kippenden Wippe wird eine bestimmte Menge des zu dosierenden Zuschlagsstoffs freigegeben. Beispielsweise indem ein Ventil mindestens einer Dosiervorrichtung durch die kippende Wippe geöffnet wird. Durch das gemeinsame Auskippen des Abwassers mit den Zuschlagsstoffen kommt es zudem zu einer für die Abwasserbehandlung vorteilhaften Vermischung.

Die Ablaufvorrichtung wird im einfachsten Fall von einem rohrförmigen Teil gebildet, das mit dem dem Auslass gegenüberliegenden Ende der fluidleitenden Verbindung verbunden ist. Die rohrförmige Ablaufvorrichtung kann das Schlauchende der als Schlauch ausgebildeten fluidleitenden Verbindung sein. Es kann jedoch auch ein Rohrstück mit dem freien Ende des Schlauchs verbunden sein.

In einer vorteilhaften Ausgestaltung der Erfindung umfasst die Ablaufvorrichtung ein T-förmiges Fluidelement mit einem in einem Rohrstück mündenden Anschlussstutzen, der mit dem dem Auslass gegenüberliegenden Ende der fluidleitenden Verbindung verbunden ist. An der Ober- und Unterseite des Rohrstücks befinden sich Öffnungen. Die im Betrieb der Ablaufvorrichtung tiefer gelegene Öffnung bildet den Ablaufeinlass. Die Länge des Rohrstücks wird derart bestimmt, dass die höher gelegen Öffnung des Rohrstücks als Belüftungsöffnung unabhängig von der Eintauchtiefe der Ablaufvorrichtung stets oberhalb des Abwasserspiegels bleibt. Dies verhindert, dass sich eventuell gebildeter Schwimmschlamm abtreibt. Die obere Öffnung unterstützt den Ablaufvorgang des Abwassers.

Um ein zu tiefes Eintauchen der Ablaufvorrichtung in das Abwasser zu verhindern, kann in einer Ausgestaltung der Erfindung an der Ablaufvorrichtung ein Auftriebskörper befestigt sein, der die maximale Eintauchtiefe der Ablaufvorrichtung in das Abwasser bei vollständig entlüfteter Hebevorrichtung begrenzt. Der Auftriebskörper verhindert, dass der Ablaufeinlass nach der Entlüftung aus dem oberen Teil der Klarwasserzone unmittelbar unterhalb des minimalen Wasserstandes in tiefere Zonen gelangt, in denen die Qualität des behandelten Abwassers schlechter sein kann. Ferner verhindert der Auftriebskörper zuverlässig ein vollständiges Abtauchen einer als T-förmiges Fluidelement ausgestalteten Ablaufvorrichtung.

Zur Vermeidung einer Durchmischung des gesamten Behälterinhalts wird das zufließende Abwasser beruhigt in den Behälter eingeleitet, indem an dem Einlass ein Zulauf für das unbehandelte Wasser angeordnet ist und die Mündung des Zulaufs rückflusssicher unterhalb des Abwasserspiegels liegt.

Nachfolgend wird die Erfindung anhand von Ausführungsbeispielen näher erläutert. Es zeigen
- **Figur 1:**: ein erstes Ausführungsbeispiel einer Abwasserbehandlungsanlage in der Reaktionsphase,
- **Figur 2:**: die Abwasserbehandlungsanlage nach Figur 1 in der Dekantierphase,
- **Figur 3:**: ein zweites Beispiel, welches nicht Teil der beanspruchten Erfindung ist, einer Abwasserbehandlungsanlage in der Reaktionsphase sowie
- **Figur 4:**: die Abwasserbehandlungsanlage nach Figur 3 in der Dekantierphase.

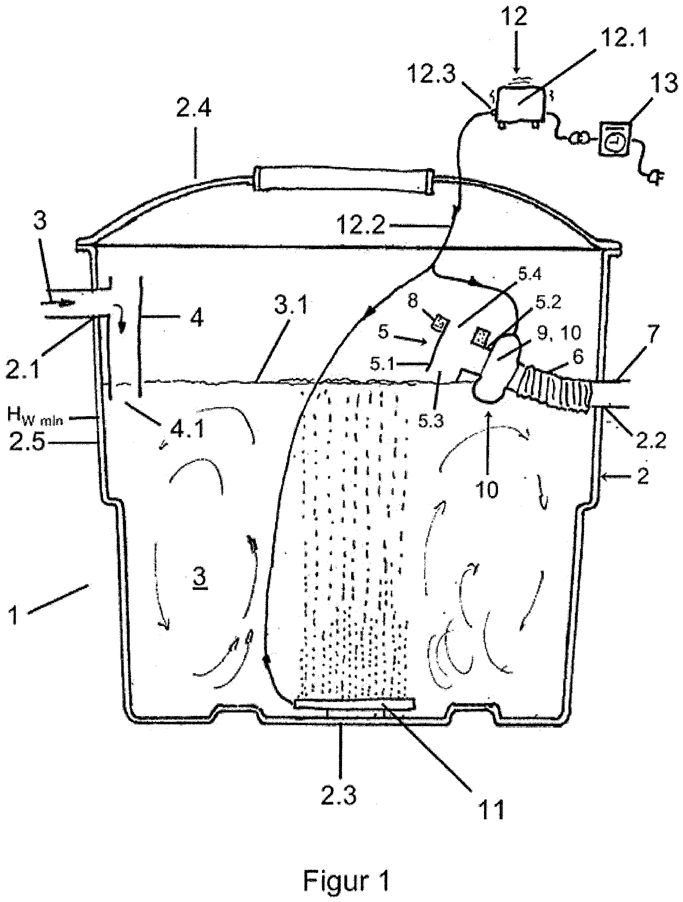

Figur 1 zeigt ein erstes Ausführungsbeispiel einer erfindungsgemäßen, sequentiell arbeitenden Abwasserbehandlungsanlage (1) (SBR-Anlage) umfassend einen Reaktorbehälter (2) zur Aufnahme von Abwasser (3) mit einem Einlass (2.1) für das unbehandelte Wasser und einem Auslass (2.2) für das behandelte Abwasser, wobei der Auslass (2.2) unterhalb des Einlasses (2.1) angeordnet ist. An der einem Reaktorboden (2.3) gegenüberliegenden Stirnseite ist auf den Reaktorbehälter (2) ein Deckel (2.4) aufgesetzt.

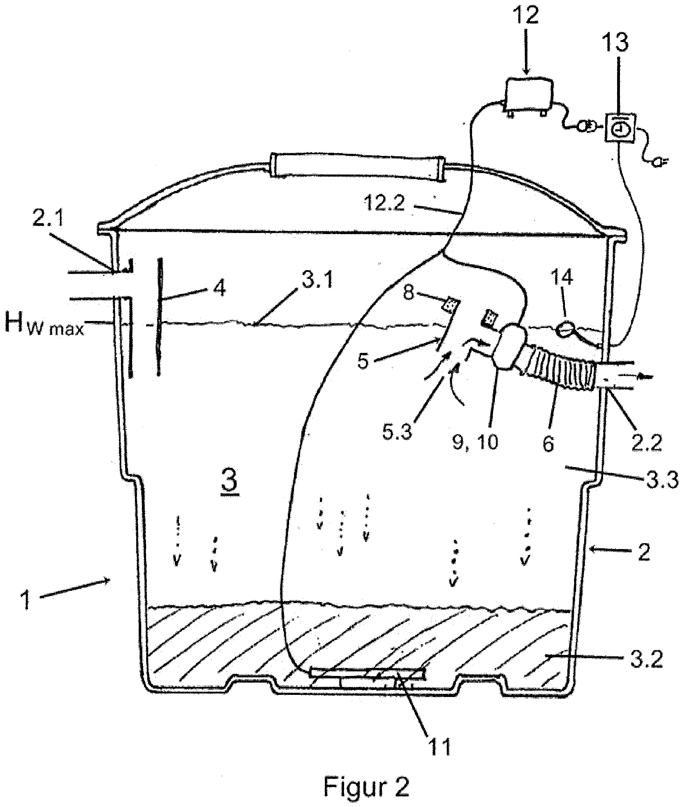

Der Einlass (2.1) befindet sich oberhalb des maximalen Abwasserstandes H_{W max} in der Wand (2.5) des Reaktorbehälters (2) (Figur 2). Der Auslass (2.2) für das behandelte Abwasser ist indes unterhalb des Einlasses (2.1) für das unbehandelte Abwasser in der Wand (2.5) des Reaktorbehälters (2) angeordnet und befindet sich oberhalb des minimalen Abwasserstandes H_{W min} der Abwasserbehandlungsanlage (1).

Der Ein- und Auslass (2.1, 2.2) sind bei dem gegebenen runden Querschnitt des Reaktorbehälters (2) diametral gegenüberliegend in der Wand (2.5) angeordnet. An dem Einlass (2.1) ist ein Zulauf (4) für das unbehandelte Abwasser (3) angeordnet, dessen Mündung (4.1) rückflusssicher stets unterhalb des Abwasserspiegels (3.1) liegt.

Eine T-förmige Ablaufvorrichtung (5) umfasst einen in einen Rohrstück (5.1) mündenden Anschlussstutzen (5.2), der mit einem dem Auslass (2.2) gegenüberliegenden Ende eines Schlauchs (6) verbunden ist. An beiden Stirnseiten des Rohrstücks (5.1.) befinden sich Öffnungen. Die im Betrieb der Ablaufvorrichtung (5) tiefergelegene Öffnung bildet einen Ablaufeinlass (5.3). Die gegenüberliegende Öffnung in dem Rohrstück (5.2) dient als Belüftungsöffnung (5.4). Um ein zu tiefes Eintauchen der Ablaufvorrichtung (5) in das Abwasser (3) zu verhindern, ist die Belüftungsöffnung (5.4) umgebend ein Auftriebskörper (8) an dem Rohrstück (5.1) befestigt. Der Schlauch (6) verbindet den Auslass (2.2) fluidleitend mit dem Anschlussstutzen (5.2) der Ablaufvorrichtung (5); er besteht aus einem flexiblen Material und erlaubt die Bewegung der Ablaufvorrichtung (5) gegenüber dem ortsfesten Auslass (2.2) .

Eine als aufblasbarer Schwimmkörper (9) ausgestaltete Hebevorrichtung (10) umgibt den Anschlussstutzen (5.2) der Ablaufvorrichtung (5). Der aufblasbare Schwimmkörper (9) besteht aus einem flexiblen, jedoch gasdichten Material, im dargestellten Ausführungsbeispiel aus einer Kunststofffolie. Abhängig von der Luftmenge in dem Schwimmkörper (9) ändern sich die auf die Ablaufvorrichtung (5) wirkenden Auftriebskräfte und damit deren Eintauchtiefe in dem Abwasser (3). Durch Belüften des Schwimmkörpers (9) wird der Ablaufeinlass (5.3) vollständig aus dem Abwasser (3) herausgehoben, wie dies in Figur 1 erkennbar ist. Durch Entlüften taucht der Ablaufeinlass (5.3) der Ablaufvorrichtung (5) in das Abwasser (3) ein, wie dies in Figur 2 dargestellt ist.

Am Reaktorboden (2.3) des Reaktorbehälters (2) ist eine Belüftungsvorrichtung (11) befestigt. Bei der Belüftungsvorrichtung (11) handelt es sich beispielsweise um einen Membran-Belüfter.

Die Abwasserbehandlungsanlage (1) umfasst weiter eine Druckluftversorgung (12), die zum Belüften sowohl der Hebevorrichtung (10) als auch der Belüftungsvorrichtung (11) eingerichtet ist. Die Druckluftversorgung (12) weist einen gemeinsamen Verdichter (12.1) und ein Druckluftleistungssystem (12.2) auf, welches die Druckseite (12.3) des gemeinsamen Verdichters (12.1) sowohl mit der Hebevorrichtung (10) als auch mit der Belüftungsvorrichtung (11) verbindet. Die Druckluftversorgung (12) umfasst außerdem eine Steuerung (13). Im dargestellten Ausführungsbeispiel ist die Steuerung (13) eine handelsübliche Zeitschaltuhr, die den elektrisch angetriebenen Verdichter (12.1) zyklisch ein- und ausschaltet.

Der Schwimmkörper (9) weist eine Drossel in Form einer kleinen Öffnung in dem Schwimmkörper (9) auf. Die Öffnung ist zum zeitverzögerten Entlüften des Schwimmkörpers nach Beendigung des Belüftens eingerichtet. Die Drossel bewirkt, dass die Luft aus dem aufblasbaren Schwimmkörper (9) über einen längeren Zeitraum, d. h. nicht schlagartig, sondern zeitverzögert, entweicht.

Optional kann die Steuerung (13) für den zyklischen Betrieb der Druckluftversorgung (12) eine Messeinrichtung( 14) zur Erfassung des Füllstandes des Abwassers in dem Reaktorbehälter (2) aufweisen. Die mechanische Füllstandsmessung erfolgt beispielsweise mit einem Schwimmer auf dem Abwasserspiegel (3.1) des Abwassers (3), der einen Schalter bewegt.

Die beschriebene Abwasserbehandlungsanlage (1) arbeitet wie folgt:
Das unbehandelte Abwasser (3) strömt diskontinuierlich über den Zulauf (4) in den Reaktorbehälter (2), wobei der Abwasserspiegel (3.1) von dem minimalen Abwasserstand H_{W min} (vgl. Figur 1) allmählich in Richtung des maximalen Abwasserstand H_{W max} (vgl. Figur 2) steigt. Das Abwasser (3) wird in der Abwasserbehandlungsanlage (1) mittels der Belüftungsvorrichtung (11) belüftet und der sogenannte Belebtschlamm (3.2) wird durch den Lufteintrag umgewälzt, wie dies in Figur 1 durch die aufsteigenden Gasblasen und die Pfeile schematisch dargestellt ist. Das Abwasser wird in der Reaktionsphase biologisch gereinigt.

Nach der Reaktionsphase folgt die Absetzphase, in der mittels der Belüftungsvorrichtung (11) keine weitere Druckluft zugeführt wird. In der Absetzphase (vgl. Figur 2) setzen sich der Belebtschlamm (3.2) und die Feststoffe nach unten ab, sodass sich oberhalb des Belebtschlamms (3.2) eine Klarwasserzone (3.3) ausbildet. Die Abschaltung des Verdichters (12.1) durch die Steuerung (13) leitet nicht nur die Absetzphase ein, sondern führt über die Drossel zu einem allmählichen Druckverlust in dem Schwimmkörper (9), der hierdurch allmählich an Auftrieb verliert, welches zu einem Abtauchen der Ablaufvorrichtung (5) in das Abwasser (3) führt, wobei der Ablaufeinlass (5. 3) der Ablaufvorrichtung (5) vollständig in das Abwasser (3) eintaucht, wie dies in Figur 2 zu erkennen ist. Die gegenüberliegende Belüftungsöffnung (5.4) der Ablaufvorrichtung (5) bleibt jedoch stets oberhalb des Abwasserspiegels (3.1). Das Eintauchen des Ablaufeinlasses (5.3) in das Abwasser bewirkt, dass das behandelte Abwasser (3) aus der Klarwasserzone (3.3) im freien Gefälle in der Dekantierphase ablaufen kann, bis der minimale Abwasserstand H_{W min} erreicht ist.

Die Messeinrichtung (14) mit dem Schwimmerschalter ist vorgesehen, wenn in der Reaktionsphase der Abwasserbehandlung ungeplant so viel unbehandeltes Abwasser (3) zuläuft, dass ein Austritt von unbehandeltem Abwasser mit Belebtschlammflocken über den Ablaufeinlass (5.3) und den Auslass (2.2) zu befürchten ist. Bei einem überplanmäßigen Zulauf von Abwasser wird mittels des Schwimmerschalters die zyklische, durch die Steuerung (13) gesteuerte Zufuhr von Druckluft vorzeitig abgebrochen, wenn der Füllstand des Abwassers (3) einen vorgegebenen Grenzwert, insbesondere den maximalen Abwasserstand H_{W max} überschreitet.

Nach dem Abziehen des behandelten Abwassers (3) aus der Klarwasserzone (3.3) in der Dekantierphase beginnt der Zyklus mit der Reaktionsphase von vorn, indem die Steuerung (13) die Druckluftversorgung (12) erneut aktiviert.

Die Druckluftversorgung (12) ist unter Berücksichtigung der Strömungswiderstände in dem Druckluftleitungssystem (12.2), der Hebevorrichtung (10) und der Belüftungsvorrichtung (11) sowie des auf die Hebevorrichtung (10) und die Belüftungsvorrichtung (11) wirkenden unterschiedlichen hydrostatischen Drucks derart ausgelegt, dass zunächst die Hebevorrichtung (10) und erst anschließend die Belüftungsvorrichtung (11) belüftet werden. Dies hat zur Folge, dass zunächst der Ablaufeinlass (5.3) der Ablaufvorrichtung (5.1) über den Abwasserspiegel (3.1) angehoben wird, bevor die kontinuierlich zugeführte Druckluft über die Belüftungsvorrichtung (11) austritt und den Belebtschlamm (3.2) erneut aufwirbelt und das Abwasser mit Sauerstoff versorgt, wie dies in Figur 1 dargestellt ist.

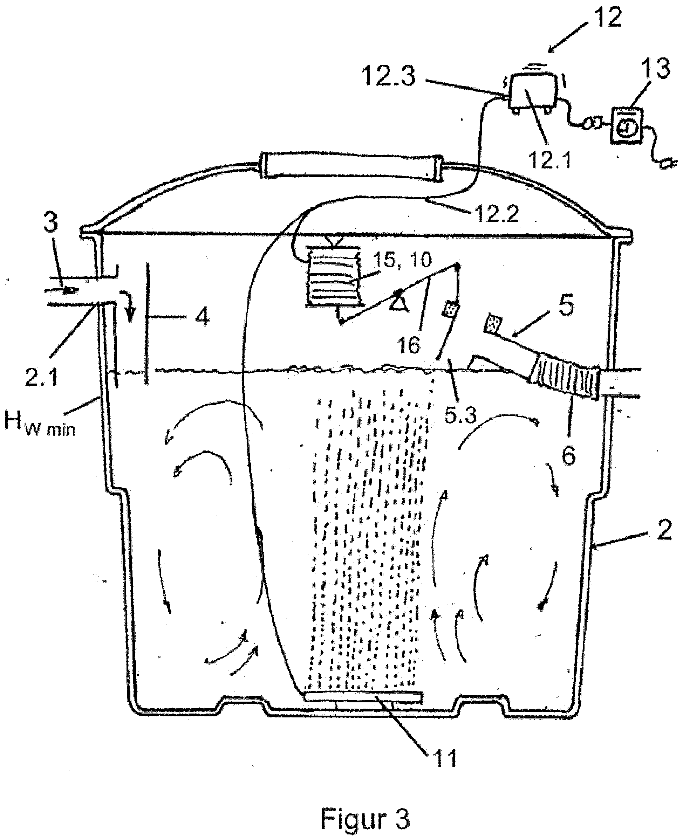

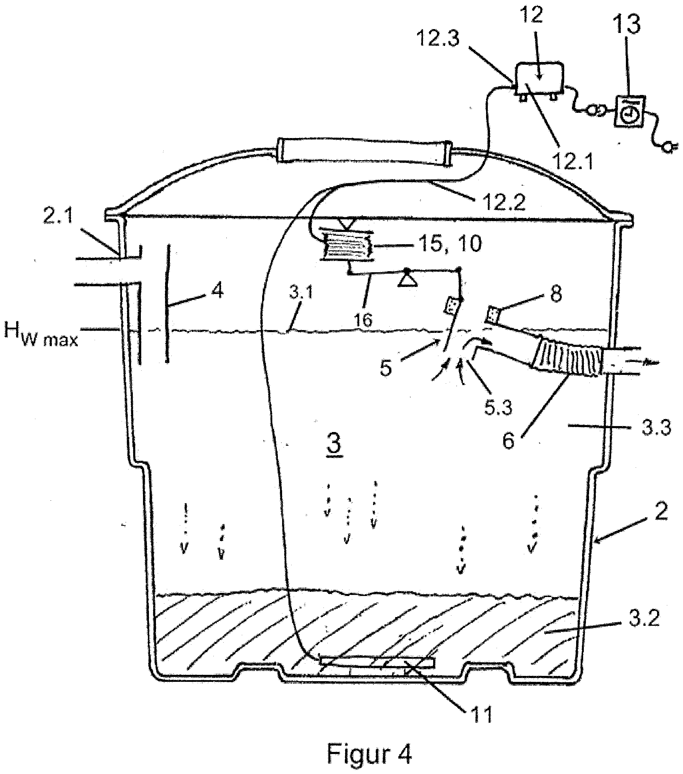

Das Beispiel nach den Figuren 3 und 4 unterscheidet sich von dem Ausführungsbeispiel nach den Figuren 1 und 2 lediglich in der Ausgestaltung der Hebevorrichtung (10). Anstelle des aufblasbaren Schwimmerkörpers (9) umfasst die Hebevorrichtung (10) einen mittels Druckluft von der Druckluftversorgung (12) betriebenen Arbeitszylinder (15) mit einer Drossel zum zeitverzögerten Entlüften des Arbeitszylinders (15). Die Bewegung des Arbeitszylinders (15) wird über ein Gestänge (16) auf die beweglich in dem Reaktorbehälter (2) angeordneter Ablaufvorrichtung (5) übertragen.

Die Arbeitsweise der Abwasserbehandlungsanlage (1) nach den Figuren 3 und 4 entspricht im Übrigen der Arbeitsweise der Abwasserbehandlungsanlage (1) nach den Figuren 1 und 2, sodass vollumfänglich auf die dortigen Erläuterungen Bezug genommen wird.

| **Nr.** | **Bezeichnung** |
|---|---|
| 1 | Abwasserbehandlungsanlage |
| 2 | Reaktorbehälter |
| 2.1 | Einlass |
| 2.2 | Auslass |
| 2.3 | Reaktorboden |
| 2.4 | Deckel |
| 2.5 | Wand |
| 3 | Abwasser |
| 3.1 | Abwasserspiegel |
| 3.2 | Belebtschlamm |
| 3.3 | Klarwasserzone |
| 4 | Zulauf |
| 4.1 | Mündung |
| 5 | Ablaufvorrichtung |
| 5.1 | Rohrstück |
| 5.2 | Anschlussstutzen |
| 5.3 | Ablaufeinlass |
| 5.4 | Belüftungsöffnung |
| 6 | Schlauch |
| 7 | Rohrstück |
| 8 | Auf triebs körper |
| 9 | Schwimmkörper |
| 10 | Hebevorrichtung |
| 11 | Belüftungsvorrichtung |
| 12 | Druckluftversorgung |
| 12.1 | Verdichter |
| 12.2 | Druckluftleitungssystem |
| 12.3 | Druckseite |
| 13 | Steuerung |
| 14 | Messeinrichtung |
| 15 | Arbeitszylinder |
| 16 | Gestänge |

## Patentansprüche

1. Sequentiell arbeitende Abwasserbehandlungsanlage (1) zur biologischen Reinigung von Abwasser (3), eingerichet für einen Klarwasserabzug unter Verzicht auf eine Pumpe oder einen Druckluftheber und der zu dessen Ansteuerung erforderlichen Ventile, umfassend
- einen Reaktorbehälter (2) zur Aufnahme von Abwasser (3) mit einem Einlass (2.1) für das unbehandelte Abwasser (3) und einem Auslass (2.2) für das behandelte Abwasser (3), wobei der Auslass (2.2) unterhalb des Einlasses (2.1) in dem Reaktorbehälter (2) angeordnet ist,
- eine Belüftungsvorrichtung (11) zum Lufteintrag in das Abwasser (3), der am Grund des Reaktorbehälters (2) angeordnet ist,
- eine beweglich in dem Reaktorbehälter (2) angeordnete Ablaufvorrichtung (5) mit einem Ablaufeinlass (5.3) für das behandelte Abwasser (3),
- eine fluidleitende Verbindung zwischen dem Ablaufeinlass (5.3) der Ablaufvorrichtung (5) und dem Auslass (2.2),
- eine be- und entlüftbare Hebevorrichtung (10) für die Ablaufvorrichtung (5), die durch Belüften den Ablaufeinlass (5.3) der Ablaufvorrichtung (5) vollständig aus dem Abwasser (3) heraushebt und durch Entlüften den Ablaufeinlass (5.3) der Ablaufvorrichtung (5) in das Abwasser (3) eintaucht, wobei die Hebevorrichtung (10) einen aufblasbaren Schwimmkörper (9) aufweist,
- eine Druckluftversorgung (12), eingerichet zum Belüften sowohl der Hebevorrichtung (10) als auch der Belüftungsvorrichtung (11),
- eine Drossel, eingerichet zum zeitverzögerten Entlüften der Hebevorrichtung (10) nach Beendigung des Belüftens, wobei die Drossel eine Abluftöffnung in dem Schwimmkörper (9) mit einem Querschnitt ist, der derart bestimmt ist, dass permanent ein Luftstrom aus dem Schwimmkörper entweicht, der stets geringer als der beim Belüften zugeführte Luftstrom ist und
- eine Steuerung (13) für einen zeitweiligen Betrieb der Druckluftversorgung (12).

2. Abwasserbehandlungsanlage nach Anspruch 1, **dadurch gekennzeichnet, dass** der Schwimmkörper (9) an der Ablaufvorrichtung (5) befestigt ist.

3. Abwasserbehandlungsanlage nach Anspruch 1 oder 2, **dadurch gekennzeichnet, dass** die fluidleitende Verbindung einen flexiblen Schlauch (6) aufweist.

4. Abwasserbehandlungsanlage nach einem der Ansprüche 1 bis 3, **dadurch gekennzeichnet, dass** die fluidleitende Verbindung ein Rohrdrehgelenk und mindestens ein Rohr aufweist.

5. Abwasserbehandlungsanlage nach einem der Ansprüche 1 bis 4, weiter umfassend eine Messeinrichtung (14) zur Erfassung des Füllstandes des Abwassers (3) in dem Reaktorbehälter (2).

6. Abwasserbehandlungsanlage nach einem der Ansprüche 1 bis 5, **dadurch gekennzeichnet, dass** die Steuerung (13) weiter derart eingerichet ist, dass die Zufuhr von Druckluft zumindest zu der Belüftungsvorrichtung (11) vorzeitig abgebrochen wird, wenn der von der Messeinrichtung (14) erfasste Füllstand des Abwassers (3) einen vorgegebenen Grenzwert überschreitet.

7. Abwasserbehandlungsanlage nach einem der Ansprüche 1 bis 6, **dadurch gekennzeichnet, dass** die Druckluftversorgung (12) einen Verdichter (12.1) und ein Druckluftleitungssystem (12.2) aufweist, welches die Druckseite (12.3) des Verdichters (12.1) mit der Hebevorrichtung (10) und der Belüftungsvorrichtung (11) verbindet.

8. Abwasserbehandlungsanlage nach einem der Ansprüche 1 bis 7, weiter umfassend eine Dosiervorrichtung für die Zugabe von Zuschlagstoffen in den Reaktorbehälter (2).

9. Abwasserbehandlungsanlage nach einem der Ansprüche 1 bis 8, **dadurch gekennzeichnet, dass** die Ablaufvorrichtung (5) ein rohrförmiges Teil aufweist, das mit dem dem Auslass (2.2) gegenüberliegenden Ende der fluidleitenden Verbindung verbunden ist.

10. Abwasserbehandlungsanlage nach einem der Ansprüche 1 bis 9, **dadurch gekennzeichnet, dass** die Ablaufvorrichtung (5)ein T-förmiges Fluidelement mit einem in einem Rohrstück (5.1) mündenden Anschlussstutzen (5.2) aufweist, der mit dem dem Auslass (2.2) gegenüberliegenden Ende der fluidleitenden Verbindung verbunden ist.

11. Abwasserbehandlungsanlage nach einem der Ansprüche 1 bis 10, **dadurch gekennzeichnet, dass** an der Ablaufvorrichtung (5) ein Auftriebskörper (8) befestigt ist, der die maximale Eintauchtiefe der Ablaufvorrichtung (5) in das Abwasser (3) bei entlüfteter Hebevorrichtung (10) begrenzt.

12. Abwasserbehandlungsanlage nach einem der Ansprüche 1 bis 11, **dadurch gekennzeichnet, dass** an dem Einlass (2.1) ein Zulauf (4) für das unbehandelte Abwasser (3) angeordnet ist und die Mündung (4.1) des Zulaufs (4) rückflusssicher unterhalb des Abwasserspiegels (3.1) liegt.

## Claims

1. Sequentially operating waste water treatment plant (1) for the biological purification of waste water (3), adapted for the withdrawal of clear water whilst dispensing with a pump or an air-lift pump and the valves required for control thereof, comprising
- a reactor vessel (2) for receiving waste water (3), comprising an inlet (2.1) for the untreated waste water (3) and an outlet (2.2) for the treated waste water (3), wherein the outlet (2.2) is arranged underneath the inlet (2.1) in the reactor vessel (2),
- an aeration device (11) for introducing air into the waste water (3) which is arranged on the base of the rector vessel (2),
- a drainage device (5) arranged movably in the reactor vessel (2) having a drain inlet (5.3) for the treated waste water (3),
- a fluid-conducting connection between the drain inlet (5.3) of the drainage device (5) and the outlet (2.2),
- an aeratable and ventable lifting device (10) for the drainage device (5) which by aerating lifts the drain inlet (5.3) of the drainage device (5) completely out of the waste water (3) and by venting immerses the drain inlet (5.3) of the drainage device (5) into the waste water (3) , wherein the lifting device (10) is an inflatable floating body (9),
- a compressed air supply (12) adapted for aerating both the lifting device (10) and also the aeration device (11),
- a throttle adapted for time-delayed venting of the lifting device (10) after the end of the aeration, wherein the throttle is an exhaust air opening in the floating body (9) having a cross-section that is determined in such a manner that an air stream permanently escapes from the floating body that is always smaller than the air stream supplied during aeration
and
- a controller (13) for the temporary operation of the compressed air supply (12).

2. Waste water treatment plant according to Claim 1, **characterized in that** the floating body (9) is attached to the drainage device (5).

3. Waste water treatment plant according to Claim 1 or 2, **characterized in that** the fluid-conducting connection comprises a flexible hose (6).

4. Waste water treatment plant according to one of Claims 1 to 3, **characterized in that** the fluid-conducting connection comprises a swivel joint and at least one pipe.

5. Waste water treatment plant according to one of Claims 1 to 4, further comprising a measuring device (14) for detecting the fill level of the waste water (3) in the reactor vessel (2).

6. Waste water treatment plant according to one of Claims 1 to 5, **characterized in that** the controller (13) is further adapted in such a manner that the supply of compressed air at least to the aeration device (11) is prematurely terminated when the fill level of the waste water (3) detected by the measuring device (14) exceeds a pre-determined limiting value.

7. Waste water treatment plant according to one of Claims 1 to 6, **characterized in that** the compressed air supply (12) comprises a compressor (12.1) and a compressed air pipeline (12.2) which connects the pressure side (12.3) of the compressor (12.1) with the lifting device (10) and the aeration device (11).

8. Waste water treatment plant according to one of Claims 1 to 7, further comprising a dosing device for supplying additives into the reactor vessel (2).

9. Waste water treatment plant according to one of Claims 1 to 8 **characterized in that** the drainage device (5) comprises a tubular part which is connected to the end of the fluid-conducting connection opposite the outlet (2.2) .

10. Waste water treatment plant according to one of Claims 1 to 9, **characterized in that** the drainage device (5) comprises a T-shaped fluid element with a connecting piece (5.2) opening into a pipe piece (5.1) which is connected to the end of the fluid-conducting connection opposite the outlet (2.2).

11. Waste water treatment plant according to one of Claims 1 to 10, **characterized in that** a buoyancy body (8) is attached to the drainage device (5) which limits the maximum immersion depth of the drainage device (5) into the waste water (3) when the lifting device (10) is vented.

12. Waste water treatment plant according to one of Claims 1 to 11, **characterized in that** an intake (4) for the untreated waste water (3) is arranged at the inlet (2.1) and the mouth (4.1) of the intake (4) lies underneath the waste water level (3.1) secure against backflow.

## Revendications

1. Station de traitement des eaux usées (1) à fonctionnement séquentiel, destinée à l'épuration biologique des eaux usées (3), configurée pour une évacuation de l'eau claire en renonçant à une pompe ou un élévateur à air comprimé et aux vannes requises pour l'activation de celui-ci, comprenant
- une cuve de réacteur (2), destinée à recevoir des eaux usées (3), pourvue d'une entrée (2.1) pour les eaux usées (3) non traitées et d'une sortie (2.2) pour les eaux usées (3) traitées, la sortie (2.2) étant placée en-dessous de l'entrée (2.1) dans la cuve de réacteur (2),
- un dispositif d'aération (11), pour l'apport d'air dans les eaux usées (3), qui est placé sur le fond inférieur de la cuve de réacteur (2),
- un dispositif d'évacuation (5), placé de manière mobile dans la cuve de réacteur (2), pourvu d'une entrée d'évacuation (5.3) pour les eaux usées (3) traitées,
- une liaison fluidique entre l'entrée d'évacuation (5.3) du dispositif d'évacuation (5) et la sortie (2.2),
- un dispositif de levage (10), susceptible d'être aéré et purgé pour le dispositif d'évacuation (5), qui par son aération, relève l'entrée d'évacuation (5.3) du dispositif d'évacuation (5) totalement hors des eaux usées (3) et par sa purge, immerge l'entrée d'évacuation (5.3) du dispositif d'évacuation (5) dans les eaux usées (3), le dispositif de levage (10) comportant un corps flottant (9) gonflable,
- une alimentation d'air comprimé (12), configurée pour l'aération aussi bien du dispositif de levage (10) qu'également du dispositif d'aération (11),
- un étranglement, configuré pour la purge temporisée du dispositif de levage (10) après l'achèvement de son aération, l'étranglement étant un orifice de sortie d'air dans le corps flottant (9) d'une section transversale qui est déterminée de sorte que s'échappe en permanence du corps flottant un courant d'air qui est toujours inférieur au courant d'air alimenté lors de l'aération
et
- un système de commande (13) pour un fonctionnement temporaire de l'alimentation d'air comprimé (12).

2. Station de traitement des eaux usées selon la revendication 1, **caractérisée en ce que** le corps flottant (9) est fixé sur le dispositif d'évacuation (5) .

3. Station de traitement des eaux usées selon la revendication 1 ou 2, **caractérisée en ce que** la liaison fluidique comporte un tuyau flexible (6).

4. Station de traitement des eaux usées selon l'une quelconque des revendications 1 à 3, **caractérisée en ce que** la liaison fluidique comporte un raccord oscillant et au moins un tuyau.

5. Station de traitement des eaux usées selon l'une quelconque des revendications 1 à 4, comprenant par ailleurs un système de mesure (14) pour la détection du niveau de remplissage des eaux usées (3) dans la cuve de réacteur (2).

6. Station de traitement des eaux usées selon l'une quelconque des revendications 1 à 5, **caractérisée en ce que** le système de commande (13) est par ailleurs configuré de telle sorte que l'alimentation d'air comprimé au moins vers le dispositif d'aération (11) soit interrompue prématurément si le niveau de remplissage des eaux usées (3) détecté par le système de mesure (14) dépasse une valeur limite prédéfinie.

7. Station de traitement des eaux usées selon l'une quelconque des revendications 1 à 6, **caractérisée en ce que** l'alimentation d'air comprimé (12) comporte un compresseur (12.1) et un système de conduite de l'air comprimé (12.2), lequel relie le côté pression (12.3) du compresseur (12.1) avec le dispositif de levage (10) et le dispositif d'aération (11).

8. Station de traitement des eaux usées selon l'une quelconque des revendications 1 à 7, comprenant par ailleurs un dispositif de dosage pour l'ajout d'additifs dans la cuve de réacteur (2).

9. Station de traitement des eaux usées selon l'une quelconque des revendications 1 à 8, **caractérisée en ce que** le dispositif d'évacuation (5) comporte une partie de forme tubulaire, qui est reliée avec l'extrémité placée au vis-à-vis de la sortie (2.2) de la liaison fluidique.

10. Station de traitement des eaux usées selon l'une quelconque des revendications 1 à 9, **caractérisée en ce que** le dispositif d'évacuation (5) comporte un élément à fluide en forme de T, pourvu d'une tubulure de raccordement (5.2) débouchant dans une pièce tubulaire (5.1), qui est reliée avec l'extrémité placée au vis-à-vis de la sortie (2.2) de la liaison fluidique.

11. Station de traitement des eaux usées selon l'une quelconque des revendications 1 à 10, **caractérisée en ce que** sur le dispositif d'évacuation (5) est fixé un corps portant (8) qui délimite la profondeur d'immersion maximum du dispositif d'évacuation (5) dans les eaux usées (3) lorsque le dispositif de levage (10) est purgé.

12. Station de traitement des eaux usées selon l'une quelconque des revendications 1 à 11, **caractérisée en ce que** sur l'entrée (2.1) est placée une arrivée (4) pour les eaux usées (3) non traitées et **en ce que** l'embouchure (4.1) de l'arrivée (4) se situe de manière à éviter les reflux en dessous du niveau des eaux usées (3.1).
